# EUROPÄISCHE PATENTSCHRIFT

(11) **EP 3 403 030 B1**
(45) Veröffentlichungstag und Bekanntmachung des Hinweises auf die Patenterteilung: **08.07.2026**
(21) Anmeldenummer: 16836160.8
(22) Anmeldetag: 22.12.2016
(51) Int. Cl.: F24F 13/02, F16L 59/02, F16L 59/153, F16L 59/18

(54) **GEBÄUDEHÜLLE MIT EINEM KANALELEMENT-SYSTEM FÜR EIN LÜFTUNGSSYSTEM**
BUILDING ENVELOPE EQUIPPED WITH A CHANNEL ELEMENT SYSTEM FOR A VENTILATION SYSTEM
ENVELOPPE EXTÉRIEURE AVEC UN SYSTÈME D'ÉLÉMENTS DE CONDUIT POUR UN SYSTÈME DE VENTILATION

(30) Priorität: 12.01.2016 CH 652016
(43) Veröffentlichungstag der Anmeldung: 21.11.2018
(73) Patentinhaber: ROCKWOOL A/S, 2640 Hedehusene (DK)
(72) Erfinder: THOMA, Urs, 8752 Näfels (CH); EGLI, Christoph, 8853 Lachen (CH)
(74) Vertreter: Swisspat Riederer Hasler Patentanwälte AG
(86) Internationale Anmeldenummer: PCT/IB2016/057925
(87) Internationale Veröffentlichungsnummer: WO 2017/122068

(56) Entgegenhaltungen:
- EP-A1- 2 113 375
- EP-A1- 2 568 208
- EP-B1- 2 568 208
- WO-A1-83/02491
- WO-A1-98/26921
- DE-U1- 202011 000 304
- FR-A1- 2 781 862
- US-A- 5 607 529
- US-A1- 2002 100 517
- US-B1- 6 231 704

## Beschreibung

Die Erfindung bezieht sich auf eine Gebäudehülle, welche ein Kanalelement-System für ein Lüftungssystem aufgebaut aus einzelnen, aneinander gereihten Kanalelementen enthält.

Ein Kanalelement ist beispielsweise in US 6 231 704 B1 oder EP 2 568 208 erläutert.

Aus Kanalelementen aufgebaute Lüftungssysteme bzw. Luftverteilungssysteme sind bekannt. Sie dienen dazu, von aussen einem Gebäude zugeführte frische Luft in den Räumen des Gebäudes zu verteilen und verbrauchte Luft innerhalb der Räume des Gebäudes zu sammeln und nach aussen abzuführen. Die verbrauchte Luft hat einen höheren Gehalt an Kohlendioxid als die frische Luft. Oftmals enthält die verbrauchte Luft auch Gase mit einem unangenehmen Geruch unterschiedlicher Herkunft (z.B. Ausdünstungen von Personen, Tieren, Pflanzen oder Gegenständen sowie Küchengerüche) sowie zu viel oder zu wenig Wasserdampf (zu hohe oder zu tiefe Luftfeuchtigkeit).

Beim Zuführen der frischen Luft und Abführen der verbrauchten Luft ist man je nach klimatischer Situation oder Jahreszeit bestrebt, einen Austausch von Wärme und möglicherweise auch einen Austausch von Wasserdampf zwischen der zugeführten frischen Luft und der abgeführten verbrauchten Luft zu gewährleisten. Hierfür werden zentrale oder dezentrale Tauschersysteme eingesetzt, in denen Wärme und ggfs. auch Feuchte zwischen der zugeführten frischen Luft und der abgeführten verbrauchten Luft ausgetauscht werden. Ein erster Extremfall ist der Fall kalter und trockener Aussenluft, wie man sie oft im Winter auf der Nordhalbkugel vorfindet. In diesem Fall überträgt das Tauschersystem einen möglichst grossen Teil der in der verbrauchten Luft enthaltenen Wärme und Luftfeuchtigkeit auf die relativ kühle und trockene Frischluft (Wärme/Feuchte-Rückgewinnung).

Ein zweiter, entgegengesetzter Extremfall ist der Fall warmer und feuchter Aussenluft, wie man sie manchmal im Sommer auf der Nordhalbkugel oder ganzjährig in den Tropen vorfindet. In diesem Fall überträgt das Tauschersystem einen möglichst grossen Teil der in der zugeführten Luft enthaltenen Wärme und Luftfeuchtigkeit auf die relativ kühle und trockene Abluft (Wärme/Feuchte-Abweisung).

Sowohl bei zentralen als auch dezentralen Tauschersystemen ist man bestrebt, einen unkontrollierten Austausch von Wärme und/oder Feuchtigkeit zwischen den Kanälen eines Lüftungssystems und der Umgebung des jeweiligen Kanals (Gebäude-Innenwände, Gebäude-Aussenwände, Raumluft, Aussenluft) möglichst gering zu halten.

Derartige Lüftungssysteme, d.h. Systeme zur kontrollierten Lüftung, können in Neubauten integriert werden oder in Bestandsbauten nachträglich installiert werden. Bei der Integration in Neubauten können die Kanäle zu einem grossen Teil im Innern des Gebäudes angeordnet werden. Bei der nachträglichen Installation in Bestandsbauten werden die Kanäle oftmals zu einem grossen Teil an der Aussenwand eines Gebäudes angebracht. Sogar die Verbindungskanäle zwischen benachbarten Räumen werden dabei oftmals entlang der Aussenwand des Gebäudes verlegt. Dies ist insbesondere dann vorteilhaft und bevorzugt, wenn man im Zuge einer nachträglichen Installation eines derartigen Lüftungssystems das Gebäude mit einer wärmeisolierenden Gebäudehülle mit Dampfsperre versieht.

Der Erfindung liegt die Aufgabe zugrunde, ein Kanalelement und ein Kanalelement-System für ein Lüftungssystem bereitzustellen, welche sich besonders gut für die nachträgliche Installation eines Lüftungssystems in einem Gebäude eignen.

Zur Lösung dieser Aufgabe stellt die Erfindung eine Gebäudehülle, welche ein Kanalelement-System für ein Lüftungssystem aufgebaut aus einzelnen, aneinandergereihten Kanalelementen enthält gemäss der technischen Lehre des Anspruchs 1 bereit.

Erfindungsgemäss weist das Kanalelement eine erste Öffnung (O1), eine zweite Öffnung (O2) sowie eine sich dazwischen erstreckende und einen Kanalabschnitt umgebende Kanalwand auf, wobei das Kanalelement einen Rohrabschnitt und einen dem Rohrabschnitt zugeordneten und diesen zumindest in Teilbereichen umhüllenden, thermisch isolierenden Hüllabschnitt aus einem anorganischen Fasermaterial, insbesondere Steinwolle oder Glaswolle, aufweist und der Hüllabschnitt eine erste Teilschale und eine zweite Teilschale aufweist, welche den Rohrabschnitt entlang der Umfangsrichtung des Rohrabschnitts vollständig umgeben, wobei die erste Teilschale eine erste Halbschale und die zweite Teilschale eine zweite Halbschale ist, die sich jeweils um 180° entlang der Umfangsrichtung des Rohrabschnitts erstrecken.

Ein Kanalelement der erfindungsgemässen Gebäudehülle kann zusammen mit anderen Kanalelementen gleicher oder unterschiedlicher Geometrie zu einem Kanal eines Lüftungssystems zusammengebaut werden, der gegenüber seiner Umgebung wärmeisoliert ist.

Zweckmässigerweise hat das Kanalelement an seiner ersten Öffnung erste Formationen und an seiner zweiten Öffnung zweite Formationen, die zu den ersten Formationen komplementär sind. Vorzugsweise ermöglichen die ersten Formationen und die zweiten Formationen eine luftdichte Rastverbindung und/oder Steckverbindung zwischen zwei Kanalelementen.

Alternativ oder ergänzend zu den ersten Formationen können Verbindungselemente vorgesehen sein, welche die Stoss-Stelle zwischen den Öffnungen benachbarter Kanalelemente axial zugfest und luftdicht verbinden.

Erfindungsgemäß ist der Rohrabschnitt des Kanalelements ein flexibles Wellrohr mit einer flexiblen Innenhaut, das insbesondere eine Wasserdampf-Sperre aufweist. Dadurch kann ein und derselbe Rohrabschnitt als geradliniger oder als gekrümmter Rohrabschnitt verwendet werden.

Vorzugsweise sind das Wellrohr und/oder die Innenhaut aus einem Polymermaterial gebildet. Dadurch erhält man eine wirkungsvolle Dampfsperre, wodurch ein unkontrollierter Austritt von Wasserdampf aus einem aus solchen Kanalelementen aufgebauten Kanalabschnitt an dessen Umgebung verhindert wird.

Erfindungsgemäß weist der Hüllabschnitt eine erste Teilschale und eine zweite Teilschale auf, welche den Rohrabschnitt entlang der Umfangsrichtung des Rohrabschnitts vollständig umgeben. Eine solche zweiteilige Ausbildung des Hüllabschnitts vereinfacht die Anbringung des Hüllabschnitts an den Rohrabschnitt.

Erfindungsgemäß ist die erste Teilschale eine erste Halbschale und die zweite Teilschale eine zweite Halbschale ist, die sich jeweils um 180° entlang der Umfangsrichtung des Rohrabschnitts erstrecken. Dies ist besonders vorteilhaft für einen geradlinigen Kanalabschnitt, da in diesem Falle die erste Halbschale und die zweite Halbschale eine identische Form haben.

Anstelle der zweiteiligen Ausbildung kann der Hüllabschnitt ein über den Rohrabschnitt stülpbarerer Schlauchabschnitt sein.

Erfindungsgemäß enthält der Hüllabschnitt ein anorganisches Fasermaterial, insbesondere Steinwolle oder Glaswolle. Ein derartiges Material ist gut wärmeisolierend und feuerfest. Es wird insbesondere in Kombination mit einem Rohrabschnitt aus Polymermaterial bevorzugt.

Bei dem Kanalelement kann der Rohrabschnitt einen kreisförmigen Querschnitt oder einen quadratischen Querschnitt haben. Der kreisförmige Querschnitt hat den Vorteil, dass sich der Rohrabschnitt bei Bedarf in jede Richtung mit einem gleichen Kraftaufwand biegen lässt. Der quadratische Querschnitt hat den Vorteil, dass sich der Rohrabschnitt in vier zueinander orthogonale Richtungen jeweils mit gleichem Kraftaufwand biegen lässt. Dabei ist ein Biegen in die vier zueinander orthogonalen Richtungen entlang der jeweiligen Mittelsenkrechten der vier Seiten des quadratischen Querschnitts mit weniger Kraftaufwand möglich als ein Biegen in die vier zueinander orthogonalen Richtungen entlang der beiden Diagonalen des quadratischen Querschnitts.

Bei einer besonders vorteilhaften Ausgestaltung des Kanalelements hat der Rohrabschnitt einen Rohrabschnitt-Querschnitt mit zwei, insbesondere nur zwei, zueinander orthogonalen Symmetrieachsen, insbesondere einen rechteckförmigen, ovalförmigen oder elliptischen Querschnitt oder einen rechteckförmigen Querschnitt mit abgerundeten Ecken oder einen rennbahnartigen Querschnitt mit zwei zueinander parallelen, einander gegenüberliegenden geradlinigen Seiten und zwei halbkreisförmigen, einander gegenüberliegenden Seiten. Dies ermöglicht die Bereitstellung eines Lüftungssystems, dessen Kanalabschnitte in einer Richtung quer zur Kanal-Längsrichtung eine geringe Bauhöhe haben. Dies ist besonders vorteilhaft beim Installieren solcher Kanalabschnitte in einer dünnen Decke oder in einer dünnen Wand, vor allem aber beim nachträglichen Installieren innerhalb einer an der Aussenseite eines Gebäudes angeordneten Gebäudehülle.

Einerseits können der Rohrabschnitt und der Hüllabschnitt jeweils ein **gerader Abschnitt** sein. Dadurch erhält man ein gerades Kanalelement.

Andererseits können der Rohrabschnitt und der Hüllabschnitt jeweils ein **gekrümmter Abschnitt** sein, dessen Krümmungswinkel insbesondere 45° oder 90° beträgt. Dadurch erhält man ein entsprechend gekrümmtes Kanalelement.

Bei der Ausgestaltung mit geringer Bauhöhe können der Rohrabschnitt und der Hüllabschnitt jeweils ein **erster gekrümmter Abschnitt** sein, der in einer ersten Krümmungsebene liegt, welche eine erste Symmetrieachse hat. Insbesondere kann dies die entlang der längsten Durchmesserlinie des Rohrabschnitt-Querschnitts verlaufende Symmetrieachse sein. Wenn ein derartiger gekrümmter Rohrabschnitt des ersten Typs durch Biegen eines geraden flachen Rohrabschnitts hergestellt wird, ist die aufzubringende Biegekraft für ein Biegen in beiden Richtungen innerhalb der ersten Krümmungsebene gleich gross.

Bei der Ausgestaltung mit geringer Bauhöhe können der Rohrabschnitt und der Hüllabschnitt jeweils ein **zweiter gekrümmter Abschnitt** sein, der in einer zweiten Krümmungsebene liegt, welche eine zweite Symmetrieachse hat. Insbesondere kann dies die entlang der kürzesten Durchmesserlinie des Rohrabschnitt-Querschnitts verlaufende Symmetrieachse sein. Wenn ein derartiger gekrümmter Rohrabschnitt des zweiten Typs durch Biegen eines geraden flachen Rohrabschnitts hergestellt wird, ist die aufzubringende Biegekraft für ein Biegen in beiden Richtungen innerhalb der zweiten Krümmungsebene gleich gross, aber kleiner als die aufzubringende Biegekraft für den Rohrabschnitt des ersten Typs.

Schliesslich können der Rohrabschnitt und der Hüllabschnitt jeweils ein **Übergangsabschnitt** sein, wobei die erste Öffnung einen ersten Rohrabschnitt-Querschnitt, insbesondere einen kreisförmigen oder quadratischen Querschnitt, hat und die zweite Öffnung einen zweiten Rohrabschnitt-Querschnitt, insbesondere einen rechteckförmigen, ovalförmigen oder elliptischen Querschnitt oder einen rechteckförmigen Querschnitt mit abgerundeten Ecken oder einen rennbahnartigen Querschnitt mit zwei zueinander parallelen, einander gegenüberliegenden geradlinigen Seiten und zwei halbkreisförmigen, einander gegenüberliegenden Seiten, hat. Dadurch erhält man ein Übergangs-Kanalelement.

Das Kanalelement-System für ein Lüftungssystem ist vorzugsweise aus einzelnen, aneinandei gereihten Kanalelementen gemäss der in den vorhergehenden Absätzen beschriebenen Bauart aufgebaut.

Das Kanalelement-System ist zweckmässigerweise gegenüber seiner Umgebung wärmeisoliert und lässt sich vorteilhaft für die nachträgliche Installation eines Lüftungssystems, insbesondere in Innern einer Gebäudehülle verwenden.

Bei einer ersten Variante sind die Stoss-Stellen aneinander grenzender Rohrabschnitte und die Stoss-Stellen aneinander grenzender Hüllabschnitte entlang der Kanal-Längsrichtung identisch, d.h. die Stoss-Stellen der Rohrabschnitte und die Stoss-Stellen der Hüllabschnitte liegen entlang eines Kanalabschnitts an denselben Stellen. Dies hat den Vorteil, dass beim Aufbau eines Kanalbereichs des Kanalelement-Systems zuvor zusammengesetzte Rohrabschnitt/Hüllabschnitt-Einheiten hintereinander in Serie zusammengefügt werden können.

Bei einer zweiten Variante sind die Stoss-Stellen aneinander grenzender Rohrabschnitte und die Stoss-Stellen aneinander grenzender Hüllabschnitte entlang der Kanal-Längsrichtung versetzt. Die Stoss-Stellen der Rohrabschnitte und die Stoss-Stellen der Hüllabschnitte sind dabei insbesondere um 1/5 bis um ein 1/2 einer Kanalelement-Länge entlang der Kanal-Längsrichtung versetzt. Dies hat den Vorteil, dass entlang eines Kanalbereichs des Kanalelement-Systems zuvor zusammengesetzte Rohrabschnitte und Hüllabschnitte eine bessere Luftabdichtung und somit eine bessere Wärmeisolierung und bessere Dampfsperre gegenüber der Umgebung des Kanalbereichs ermöglichen.

Bei dieser zweiten Variante sind wiederum insbesondere zwei Konfigurationen bzw. zwei Verfahren zur Herstellung eines Kanalbereichs vorteilhaft.

Bei der ersten Konfiguration bzw. dem ersten Verfahren werden die einzelnen Rohrabschnitte zunächst zu einem Rohrbereich mit Stoss-Stellen zusammengesetzt und die Hüllabschnitte anschliessend um den Rohrbereich herum mit dem entsprechenden Versatz entlang der Kanal-Längsrichtung angebracht, wobei jeweils eine Stoss-Stelle des Rohrbereichs von einem durchgehenden Hüllabschnitt überbrückt wird.

Bei der zweiten Konfiguration bzw. dem zweiten Verfahren werden die einzelnen Rohrabschnitte und Hüllabschnitte zunächst zu jeweiligen Rohrabschnitt/Hüllabschnitt-Einheiten, d.h. jeweiligen Kanalelementen, zusammengesetzt. Jede dieser Rohrabschnitt/Hüllabschnitt-Einheiten hat auf der Seite der ersten Öffnung nur einen Rohrabschnitt-Bereich ohne Abdeckung mit einem Hüllabschnitt-Bereich, d.h. einen freiliegenden ("nackten") Rohrabschnitt-Bereich und auf der Seite der zweiten Öffnung nur einen Hüllabschnitt-Bereich ohne Rohrabschnitt-Bereich darin. d.h. einen "leeren" Hüllabschnitt-Bereich. Anschliessend werden diese Rohrabschnitt/Hüllabschnitt-Bereiche zusammengesetzt.

Beim Erstellen der erfindungsgemässen Gebäudehülle werden vorzugsweise zuerst erste Halbschalen von Hüllabschnitten an der Gebäudewand oder der halbfertigen Gebäudehülle angebracht, anschliessend die jeweiligen geraden oder gekrümmten Rohrabschnitte innerhalb der Halbschalen aneinandergesetzt und schliesslich zweite Halbschalen auf den aneinandergesetzten Rohrabschnitten angebracht. Danach wird die Gebäudehülle angebracht bzw. fertiggestellt.

Vorzugsweise enthält die Gebäudehülle einen im wesentlichen horizontal verlaufenden Kanalbereich, wobei der horizontal verlaufende Kanalbereich sich insbesondere entlang des gesamten Umfangs eines Grundrisses des Gebäudes erstreckt. Dies erschwert die Ausbreitung eines Brandes in vertikaler Richtung innerhalb einer Gebäudehülle und ist somit ein wirkungsvoller Beitrag für den Brandschutz.

Besonders vorteilhaft ist es, wenn das Gebäude ein mehrstockiges Gebäude ist und das Kanalsystem mehrere zueinander vertikal versetzte horizontal verlaufende Kanalbereiche aufweist. Dies ist ein wertvoller Beitrag zum Brandschutz.

Weitere Vorteile, Merkmale und Anwendungsmöglichkeiten der Erfindung ergeben sich aus der nun folgenden Beschreibung nicht einschränkend aufzufassender Ausführungsbeispiele anhand der Zeichnung. Es zeigen:
Fig. 1 einen Querschnitt durch einen aus zwei Halbschalen bestehenden Hüllabschnitt eines erfindungsgemässen Kanalelements;
Fig. 2 eine Perspektivansicht einer Hüllabschnitt-Halbschale des Kanalelements von Fig. 1;
Fig. 3A eine Seitenansicht eines zweischaligen Hüllabschnitts ohne Rohrabschnitt;
Fig. 3B eine Draufsicht auf die erste Halbschale des Hüllabschnitts von Fig. 3A ohne Rohrabschnitt;
Fig. 4A eine Seitenansicht des teilweise geschnittenen zweischaligen Hüllabschnitts von Fig. 3A mit einem darin eingebetteten gekrümmten Rohrabschnitt;
Fig. 4B eine Draufsicht auf die erste Halbschale des Hüllabschnitts von Fig. 4A mit dem darin eingebetteten gekrümmten Rohrabschnitt;
Fig. 5A eine erste Seitenansicht mit Blick auf die erste Öffnung eines zweischaligen Hüllabschnitts ohne Rohrabschnitt;
Fig. 5B eine zweite Seitenansicht mit Blick auf die zweite Öffnung des zweischaligen Hüllabschnitts von Fig. 5A ohne Rohrabschnitt;
Fig. 5C eine Draufsicht auf die erste Halbschale des Hüllabschnitts von Fig. 5A oder Fig. 5B ohne Rohrabschnitt;
Fig. 6A eine erste Seitenansicht mit Blick auf die erste Öffnung des zweischaligen Hüllabschnitts von Fig. 5A, Fig. 5B oder Fig. 5C mit einem darin eingebetteten gekrümmten Rohrabschnitt;
Fig. 6B eine zweite Seitenansicht mit Blick auf die zweite Öffnung des zweischaligen Hüllabschnitts von Fig. 5A, Fig. 5B oder Fig. 5C mit dem darin eingebetteten gekrümmten Rohrabschnitt;
Fig. 6C eine Draufsicht auf die erste Halbschale des Hüllabschnitts von Fig. 5A, Fig. 5B oder Fig. 5C mit dem darin eingebetteten gekrümmten Rohrabschnitt;
Fig. 7A eine erste Seitenansicht mit Blick auf die erste Öffnung eines weiteren zweischaligen Hüllabschnitts ohne Rohrabschnitt;
Fig. 7B eine zweite Seitenansicht mit Blick auf die zweite Öffnung des zweischaligen Hüllabschnitts von Fig. 7A ohne Rohrabschnitt;
Fig. 7C eine Draufsicht auf die erste Halbschale des Hüllabschnitts von Fig. 7A oder Fig. 7B ohne Rohrabschnitt;
Fig. 8A eine erste Seitenansicht mit Blick auf die erste Öffnung des zweischaligen Hüllabschnitts von Fig. 7A, Fig. 7B oder Fig. 7C mit einem darin eingebetteten gekrümmten Rohrabschnitt;
Fig. 8B eine zweite Seitenansicht mit Blick auf die zweite Öffnung des zweischaligen Hüllabschnitts von Fig. 7A, Fig. 7B oder Fig. 7C mit dem darin eingebetteten gekrümmten Rohrabschnitt;
Fig. 8C eine Draufsicht auf die erste Halbschale des Hüllabschnitts von Fig. 7A, Fig. 7B oder Fig. 7C mit dem darin eingebetteten gekrümmten Rohrabschnitt;
Fig. 9A eine erste Seitenansicht mit Blick auf die erste Öffnung eines weiteren zweischaligen Hüllabschnitts ohne Rohrabschnitt;
Fig. 9B eine zweite Seitenansicht mit Blick auf die zweite Öffnung des zweischaligen Hüllabschnitts von Fig. 9A ohne Rohrabschnitt;
Fig. 9C eine Draufsicht auf die erste Halbschale des Hüllabschnitts von Fig. 9A oder Fig. 9B ohne Rohrabschnitt;
Fig. 10A eine erste Seitenansicht mit Blick auf die erste Öffnung des zweischaligen Hüllabschnitts von Fig. 9A, Fig. 9B oder Fig. 9C mit einem darin eingebetteten gekrümmten Rohrabschnitt;
Fig. 10B eine zweite Seitenansicht mit Blick auf die zweite Öffnung des zweischaligen Hüllabschnitts von Fig. 9A, Fig. 9B oder Fig. 9C mit dem darin eingebetteten gekrümmten Rohrabschnitt;
Fig. 10C eine Draufsicht auf die erste Halbschale des Hüllabschnitts von Fig. 9A, Fig. 9B oder Fig. 9C mit dem darin eingebetteten gekrümmten Rohrabschnitt;
Fig. 11A eine Seitenansicht (ähnlich wie bei Fig. 1) mit Blick auf eine Öffnung eines weiteren zweischaligen Hüllabschnitts ohne Rohrabschnitt;
Fig. 11B eine Draufsicht auf die erste Halbschale des Hüllabschnitts von Fig. 11A ohne Rohrabschnitt;
Fig. 12A eine Seitenansicht mit Blick auf die Öffnung des zweischaligen Hüllabschnitts von Fig. 11A oder Fig. 11B mit einem darin eingebetteten geraden Rohrabschnitt;
Fig. 12B eine Draufsicht auf die erste Halbschale des Hüllabschnitts von Fig. 11A oder Fig. 11B mit dem darin eingebetteten geraden Rohrabschnitt.

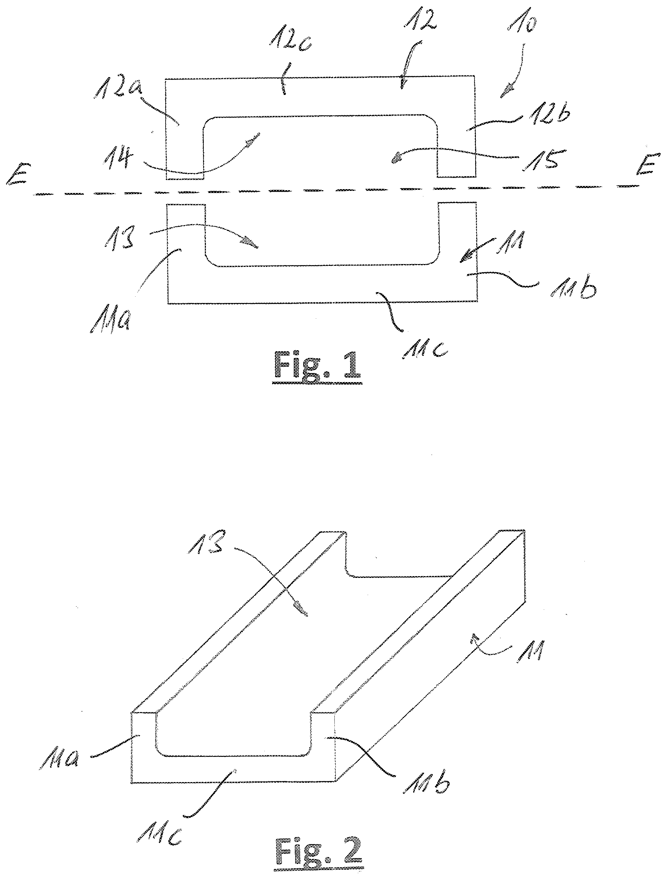

In **Fig. 1** ist ein Querschnitt eines Hüllabschnitts 10 eines erfindungsgemässen Kanalelements für einen geraden (in Fig. 1 nicht gezeigten) Rohrabschnitt dargestellt. Der Hüllabschnitt 10 enthält eine erste Halbschale 11 und eine zweite Halbschale 12, die beide identisch geformt sind und die Form eines U-Profils oder wannenförmigen Profils quer zur (senkrecht zur Zeichnungsebene der Fig. 1 verlaufenden) Hüllabschnitt-Längsachse bzw. Kanalelement-Längsachse haben, wie dies in Fig. 2 gezeigt ist. Die erste Halbschale 11 enthält einen ersten Schenkel 11a, einen zweiten Schenkel 11b und einen ihren ersten Schenkel 11a mit ihrem zweiten Schenkel 11b verbindenden Steg 11c. Die zweite Halbschale 12 enthält einen ersten Schenkel 12a, einen zweiten Schenkel 12b und einen ihren ersten Schenkel 12a mit ihrem zweiten Schenkel 12b verbindenden Steg 12c. Die beiden Halbschalen 11 und 12 sind mit ihren Querschnittsprofilen entgegengesetzt und bezüglich einer sich zwischen ihnen erstreckenden Symmetrieebene E-E symmetrisch angeordnet, so dass sich die beiden Schenkel 11a und 11b der ersten Halbschale 11 entgegengesetzt zu den beiden Schenkeln 12a und 12b der zweiten Halbschale 12 erstrecken.

Die beiden Schenkel 11a und 11b sowie der Steg 11c der ersten Halbschale 11 begrenzen einen ersten Innenraum 13. Die beiden Schenkel 12a und 12b sowie der Steg 12c der zweiten Halbschale 12 begrenzen einen zweiten Innenraum 14. Der erste Innenraum 13 und der zweite Innenraum 14 bilden zusammen einen gesamten Innenraum 15 des Hüllabschnitts 10. Wenn die beiden Halbschalen 11 und 12 mit den Enden ihren Schenkel aneinander anliegen, d.h. wenn sowohl die Enden der beiden ersten Schenkel 11a und 12a aneinander anliegen als auch die Enden der beiden zweiten Schenkel 11b und 12b aneinander anliegen, entspricht dieser Innenraum 15 dem Raumbedarf eines zwischen den beiden Halbschalen 11 und 12 eingebetteten (in Fig. 1 nicht gezeigten) Rohrabschnitts. Die beiden Halbschalen 11 und 12 mit U-Profil bzw. wannenförmigem Profil umgreifen dann den zwischen ihnen eingebetteten Rohrabschnitt entlang des gesamten Umfangs des Rohrabschnitts.

In **Fig. 2** ist eine Perspektivansicht der ersten bzw. unteren Hüllabschnitt-Halbschale 11 des Kanalelements von Fig. 1 dargestellt. Man erkennt den ersten Schenkel 11a, den zweiten Schenkel 11b sowie den diese verbindenden Steg 11c der ersten Halbschale 11. Ausserdem erkennt man den durch die erste Halbschale 11 umgrenzten ersten Innenraum 13.

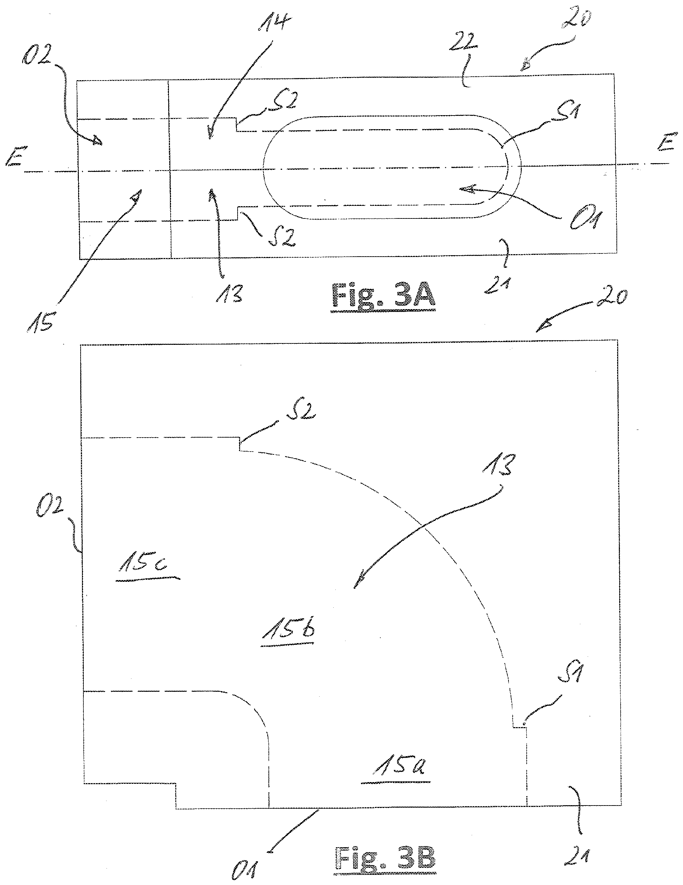

In **Fig. 3A** ist eine Seitenansicht eines zweischaligen Hüllabschnitts 20 ohne Rohrabschnitt dargestellt. Man erkennt eine erste bzw. untere Halbschale 21 und eine zweite bzw. obere Halbschale 22. Die beiden Halbschalen 21 und 22 sind bezüglich der sich zwischen ihnen erstreckenden Symmetrieebene E-E symmetrisch. Die erste Halbschale 11 begrenzt einen ersten Innenraum 13, und die zweite Halbschale 12 begrenzt einen zweiten Innenraum 14 (dargestellt durch die beiden gestrichelten Linien). Der erste Innenraum 13 und der zweite Innenraum 14 bilden zusammen einen gesamten Innenraum 15 des Hüllabschnitts 20. Der Hüllabschnitt 20 hat eine erste Öffnung O1 und eine zweite Öffnung O2, zwischen denen sich der Innenraum 15 des zweischaligen Hüllabschnitts 20 erstreckt.

In **Fig. 3B** ist eine Draufsicht auf die erste Halbschale 21 des Hüllabschnitts 20 von Fig. 3A ohne Rohrabschnitt dargestellt. Man erkennt den durch die erste Halbschale 21 begrenzten ersten Innenraum 13, der die Gestalt eines gekrümmten offenen Kanals mit einer 90°-Krümmung hat und sich zwischen der ersten Öffnung O1 und der zweiten Öffnung O2 erstreckt. Die erste Halbschale 21 mit ihrem ersten Innenraum 13 bildet zusammen mit der zweiten Halbschale 22 (siehe Fig. 3A) und deren zweiten Innenraum 14 den Innenraum 15 in Form eines geschlossenen Kanals mit einer 90°-Krümmung, der sich zwischen der ersten Öffnung O1 und der zweiten Öffnung O2 erstreckt.

Der Innenraum 15 hat entlang seines sich zwischen der ersten Öffnung O1 und der zweiten Öffnung O2 erstreckenden gekrümmten Pfades eine erste Schulter S1 und ein zweite Schulter S2. Der Innenraum 15 hat zwischen der ersten Öffnung O1 und der ersten Schulter S1 einen ersten geradlinigen Kanalabschnitt 15a, zwischen der ersten Schulter S1 und der zweiten Schulter S2 einen gekrümmten Kanalabschnitt 15b und zwischen der zweiten Schulter S2 und der zweiten Öffnung O2 einen zweiten geradlinigen Kanalabschnitt 15c.

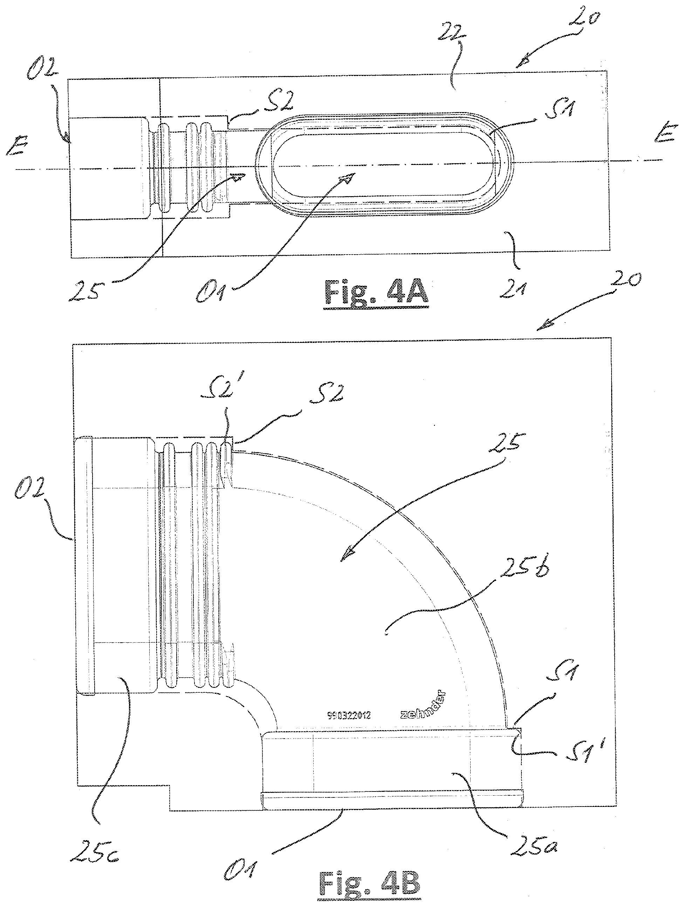

In **Fig. 4A** ist eine Seitenansicht des teilweise geschnittenen zweischaligen Hüllabschnitts 20 von Fig. 3A mit einem darin eingebetteten gekrümmten Rohrabschnitt 25 dargestellt. Der Rohrabschnitt 25 ist zwischen der ersten Halbschale 21 und der zweiten Halbschale 22 (siehe Fig. 3A) in den Innenraum 15 eingebettet und hat die Form eines geschlossenen Kanals mit einer 90°-Krümmung, der sich zwischen einer ersten Öffnung O1 und einer zweiten Öffnung O2 des Rohrabschnitts 25 erstreckt.

Der Rohrabschnitt 25 hat entlang seines sich zwischen seiner ersten Öffnung O1 und seiner zweiten Öffnung O2 erstreckenden gekrümmten Pfades eine erste Schulter S1' und eine zweite Schulter S2'. Der Rohrabschnitt 25 hat zwischen seiner ersten Öffnung O1 und seiner ersten Schulter S1' einen ersten geradlinigen Rohrabschnitt 25a, zwischen seiner ersten Schulter S1' und seiner zweiten Schulter S2' einen gekrümmten Rohrabschnitt 25b und zwischen seiner zweiten Schulter S2' und seiner zweiten Öffnung O2 einen zweiten geradlinigen Rohrabschnitt 25c.

In **Fig. 4B** ist eine Draufsicht auf die erste Halbschale 21 des Hüllabschnitts 20 von Fig. 4A mit dem darin eingebetteten gekrümmten Rohrabschnitt 25 dargestellt.

Man erkennt, dass der in der ersten Halbschale 21 eingebettete Rohrabschnitt 25 mit seinen Schultern S1' und S2' an den Schultern S1 und S2 der Halbschale 21 anliegt. Der Rohrabschnitt 25 ist somit formschlüssig in der ersten Halbschale 21 eingebettet und dadurch gegen eine Verschiebung oder Verdrehung gegenüber der Halbschale 21 fixiert. Der Rohrabschnitt 25 ist auch in der zweiten Halbschale 22 formschlüssig eingebettet.

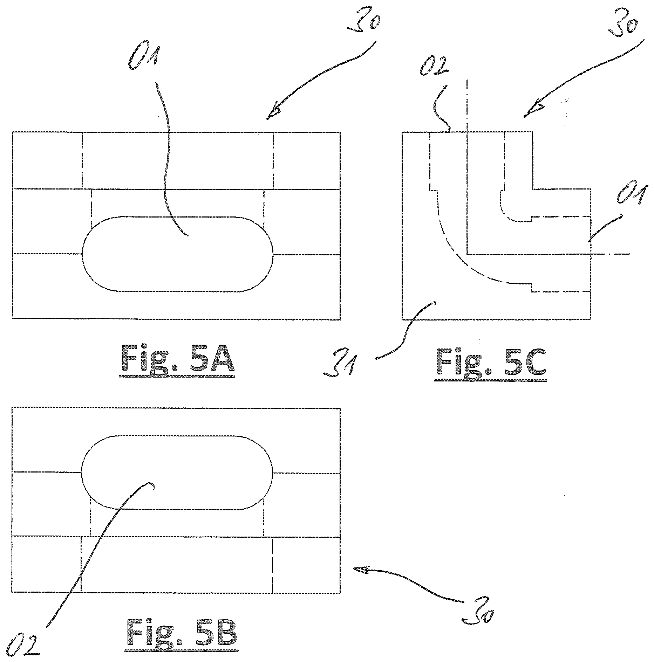

In den Figuren 5A bis 12B sind weitere erfindungsgemässe Kanalelemente mit ähnlichen Hüllabschnitten und Rohrabschnitten wie in den Figuren 1, 2, 3A, 3B, 4A und 4B dargestellt. Das in der Beschreibung dieser Figuren Gesagte gilt entsprechend auch für die Figuren 5A bis 12B.

In **Fig. 5A** ist eine erste Seitenansicht mit Blick auf die erste Öffnung O1 eines zweischaligen Hüllabschnitts 30 ohne Rohrabschnitt dargestellt.

In **Fig. 5B** ist eine zweite Seitenansicht mit Blick auf die zweite Öffnung O2 des zweischaligen Hüllabschnitts 30 von Fig. 5A ohne Rohrabschnitt dargestellt.

In **Fig. 5C** ist eine Draufsicht auf die erste Halbschale 31 des Hüllabschnitts 30 von Fig. 5A oder Fig. 5B ohne Rohrabschnitt dargestellt.

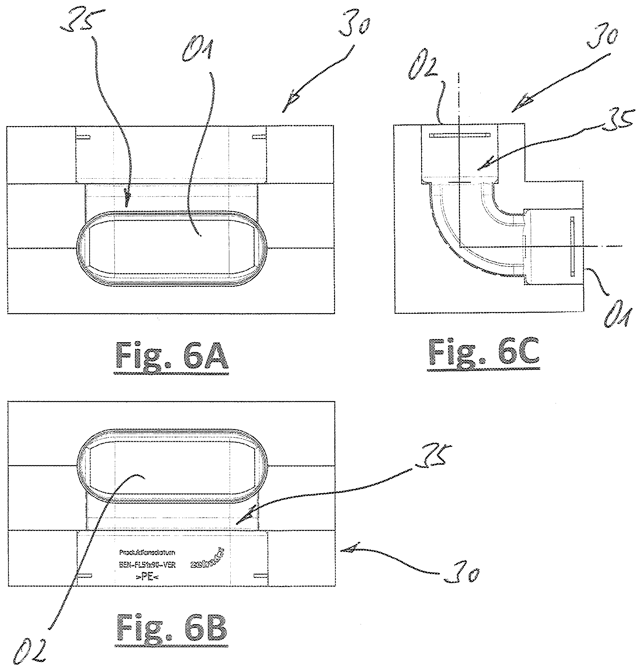

In **Fig. 6A** ist eine erste Seitenansicht mit Blick auf die erste Öffnung O1 des zweischaligen Hüllabschnitts 30 von Fig. 5A, Fig. 5B oder Fig. 5C mit einem darin eingebetteten gekrümmten Rohrabschnitt 35 dargestellt.

In **Fig. 6B** ist eine zweite Seitenansicht mit Blick auf die zweite Öffnung O2 des zweischaligen Hüllabschnitts 30 von Fig. 5A, Fig. 5B oder Fig. 5C mit dem darin eingebetteten gekrümmten Rohrabschnitt 35 dargestellt.

In **Fig. 6C** ist eine Draufsicht auf die erste Halbschale 31 des Hüllabschnitts 30 von Fig. 5A, Fig. 5B oder Fig. 5C mit dem darin eingebetteten gekrümmten Rohrabschnitt 35 dargestellt.

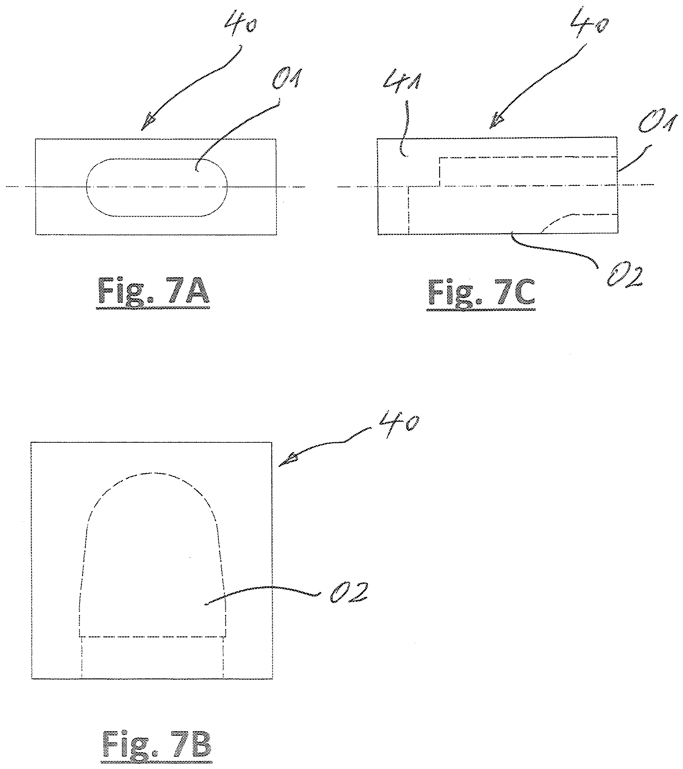

In **Fig. 7A** ist eine erste Seitenansicht mit Blick auf die erste Öffnung O1 eines weiteren zweischaligen Hüllabschnitts 40 ohne Rohrabschnitt dargestellt.

In **Fig. 7B** ist eine zweite Seitenansicht mit Blick auf die zweite Öffnung O2 des zweischaligen Hüllabschnitts 40 von Fig. 7A ohne Rohrabschnitt dargestellt.

In **Fig. 7C** ist eine Draufsicht auf die erste Halbschale 41 des Hüllabschnitts 40 von Fig. 7A oder Fig. 7B ohne Rohrabschnitt dargestellt.

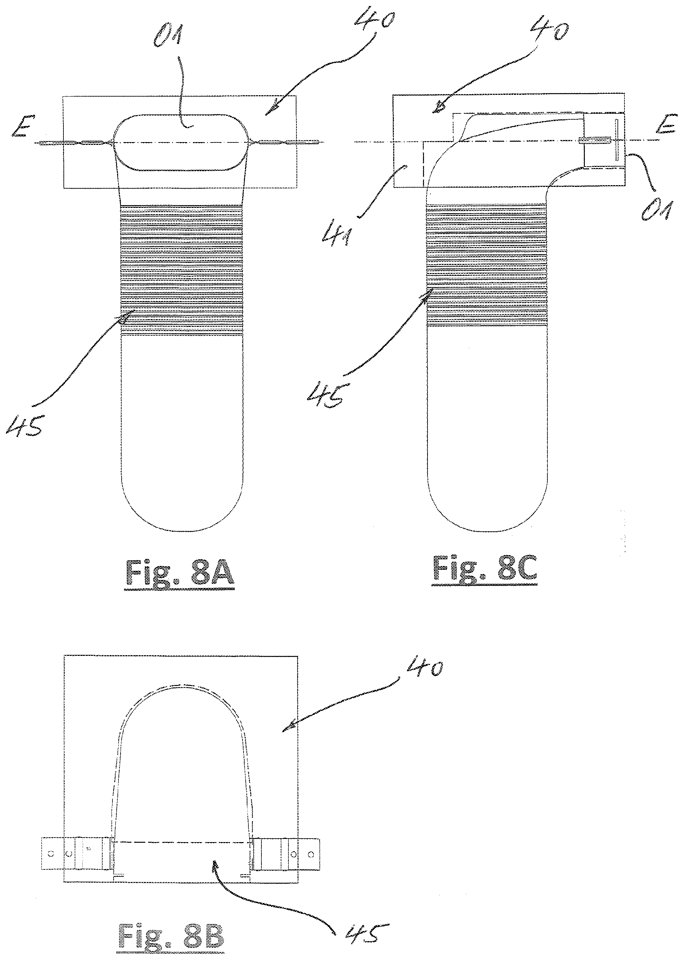

In **Fig. 8A** ist eine erste Seitenansicht mit Blick auf die erste Öffnung O1 des zweischaligen Hüllabschnitts 40 von Fig. 7A, Fig. 7B oder Fig. 7C mit einem darin eingebetteten gekrümmten Rohrabschnitt 45 dargestellt.

In **Fig. 8B** ist eine zweite Seitenansicht mit Blick auf die zweite Öffnung O2 des zweischaligen Hüllabschnitts 40 von Fig. 7A, Fig. 7B oder Fig. 7C mit dem darin eingebetteten gekrümmten Rohrabschnitt 45 dargestellt.

In **Fig. 8C** ist eine Draufsicht auf die erste Halbschale 41 des Hüllabschnitts 40 von Fig. 7A, Fig. 7B oder Fig. 7C mit dem darin eingebetteten gekrümmten Rohrabschnitt 45 dargestellt.

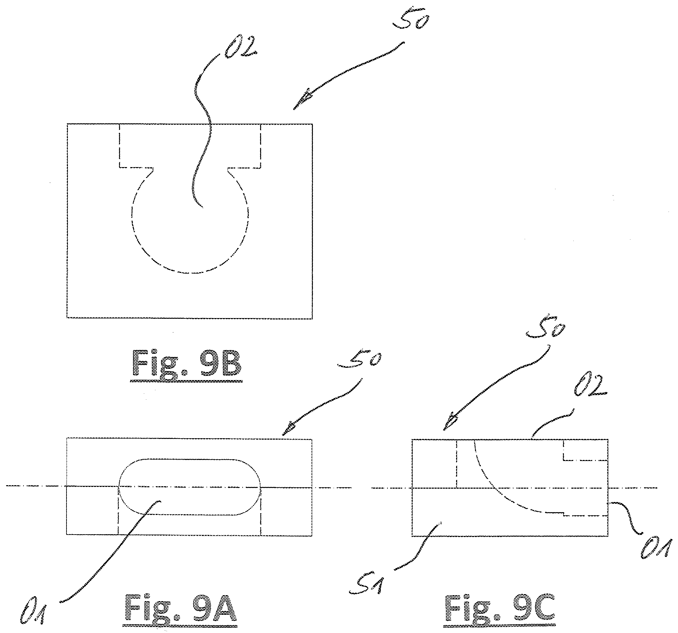

In **Fig. 9A** ist eine erste Seitenansicht mit Blick auf die erste Öffnung O1 eines weiteren zweischaligen Hüllabschnitts 50 ohne Rohrabschnitt dargestellt.

In **Fig. 9B** ist eine zweite Seitenansicht mit Blick auf die zweite Öffnung O2 des zweischaligen Hüllabschnitts 50 von Fig. 9A ohne Rohrabschnitt dargestellt.

In **Fig. 9C** ist eine Draufsicht auf die erste Halbschale 51 des Hüllabschnitts 50 von Fig. 9A oder Fig. 9B ohne Rohrabschnitt dargestellt.

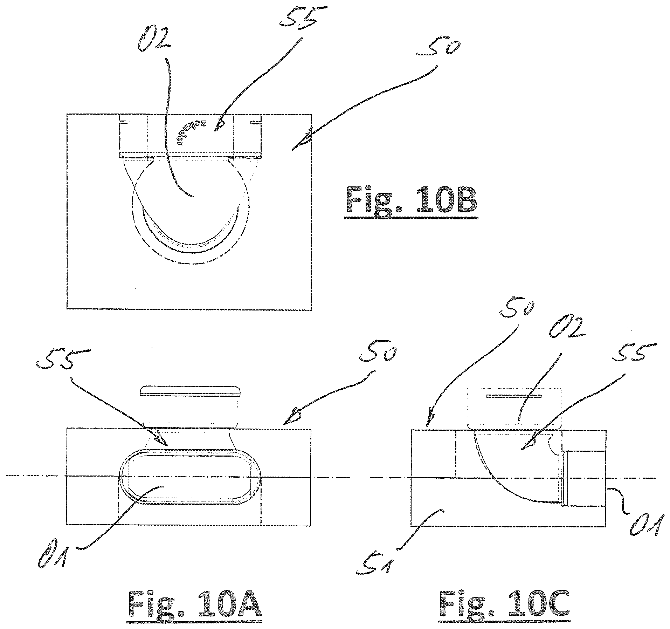

In **Fig. 10A** ist eine erste Seitenansicht mit Blick auf die erste Öffnung O1 des zweischaligen Hüllabschnitts 50 von Fig. 9A, Fig. 9B oder Fig. 9C mit einem darin eingebetteten gekrümmten Rohrabschnitt 55 dargestellt.

In **Fig. 10B** ist eine zweite Seitenansicht mit Blick auf die zweite Öffnung O2 des zweischaligen Hüllabschnitts 50 von Fig. 9A, Fig. 9B oder Fig. 9C mit dem darin eingebetteten gekrümmten Rohrabschnitt 55 dargestellt.

In **Fig. 10C** ist eine Draufsicht auf die erste Halbschale 51 des Hüllabschnitts 50 von Fig. 9A, Fig. 9B oder Fig. 9C mit dem darin eingebetteten gekrümmten Rohrabschnitt 55 dargestellt.

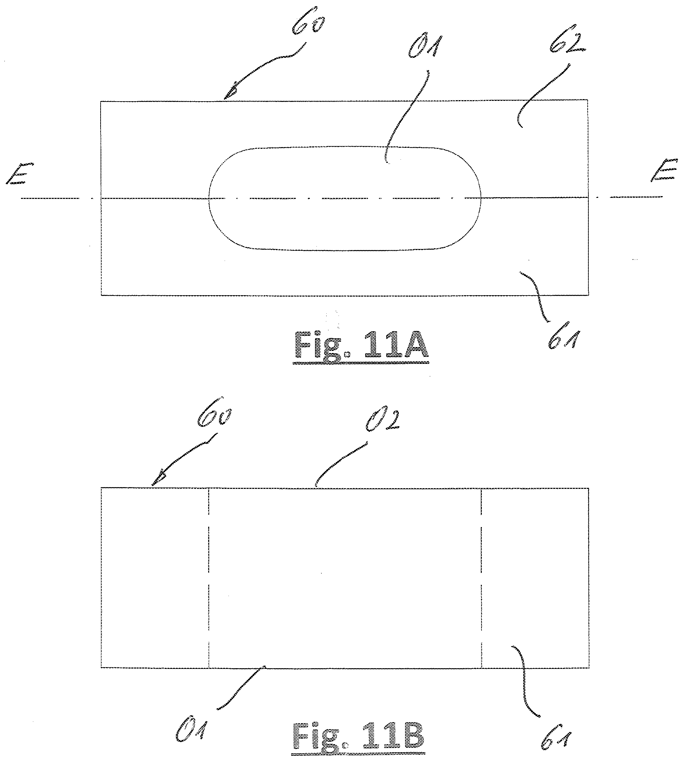

In **Fig. 11A** ist eine Seitenansicht (ähnlich wie bei Fig. 1) mit Blick auf eine Öffnung O1 eines weiteren zweischaligen Hüllabschnitts 60 ohne Rohrabschnitt dargestellt. Man erkennt eine untere, erste Halbschale 61 und eine obere, zweite Halbschale 62.

In **Fig. 11B** ist eine Draufsicht auf die erste Halbschale 61 des Hüllabschnitts 60 von Fig. 11A ohne Rohrabschnitt dargestellt. Man erkennt wieder die untere, erste Halbschale 61 und die obere, zweite Halbschale 62.

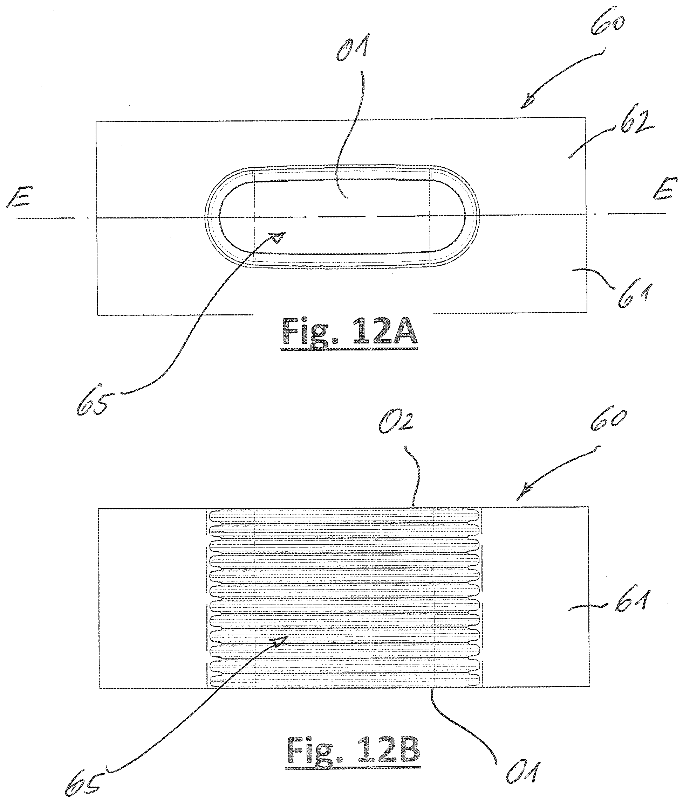

In **Fig. 12A** ist eine Seitenansicht mit Blick auf die Öffnung O1 des zweischaligen Hüllabschnitts 60 von Fig. 11A oder Fig. 11B mit einem darin eingebetteten geraden Rohrabschnitt 65 dargestellt. Man erkennt die untere, erste Halbschale 61 und die obere, zweite Halbschale 62.

In **Fig. 12B** ist eine Draufsicht auf die erste Halbschale 61 des Hüllabschnitts 60 von Fig. 11A oder Fig. 11B mit dem darin eingebetteten geraden Rohrabschnitt 65 dargestellt.

## Patentansprüche

1. **Gebäudehülle,** welche ein Kanalelement-System für ein Lüftungssystem aufgebaut aus einzelnen, aneinander gereihten Kanalelementen enthält, wobei das Kanalelement eine erste Öffnung(O1), eine zweite Öffnung (O2) sowie eine sich dazwischen erstreckende und einen Kanalabschnitt umgebende Kanalwand aufweist, wobei das Kanalelement einen Rohrabschnitt (25; 35; 45; 55; 65) und einen dem Rohrabschnitt zugeordneten und diesen zumindest in Teilbereichen umhüllenden, thermisch isolierenden Hüllabschnitt (10; 20; 30; 40; 50; 60) aus einem anorganischen Fasermaterial, insbesondere Steinwolle oder Glaswolle, aufweist und der Hüllabschnitt (10; 20; 30; 40; 50; 60) eine erste Teilschale (11; 21; 31; 41; 51; 61) und eine zweite Teilschale (12; 22; 32; 42; 52; 62) aufweist, welche den Rohrabschnitt(25; 35; 45; 55; 65) entlang der Umfangsrichtung des Rohrabschnitts vollständig umgeben, wobei die erste Teilschale eine erste Halbschale und die zweite Teilschale eine zweite Halbschale ist, die sich jeweils um 180° entlang der Umfangsrichtung des Rohrabschnitts erstrecken.

2. **Gebäudehülle** nach Anspruch 1, **dadurch gekennzeichnet, dass** sie einen im Wesentlichen horizontal verlaufenden Kanalbereich enthält, wobei der horizontal verlaufende Kanalbereich sich insbesondere entlang des gesamten Umfangs eines Grundrisses des Gebäudes erstreckt, und/oder dass das Gebäude ein mehrstockiges Gebäude ist, wobei das Kanalsystem mehrere zueinander vertikal versetzte horizontal verlaufende Kanalbereiche aufweist.

3. **Gebäudehülle** nach Anspruch 1 oder 2, **dadurch gekennzeichnet, dass** der Rohrabschnitt ein flexibles Wellrohr mit einer flexiblen Innenhaut ist, das insbesondere eine Wasserdampf-Sperre aufweist.

4. **Gebäudehülle** nach einem der Ansprüche 1 bis 3, **dadurch gekennzeichnet, dass** das Kanalelement an seiner ersten Öffnung erste Formationen und an seiner zweiten Öffnung zweite Formationen aufweist, die zu den ersten Formationen komplementär sind.

5. **Gebäudehülle** nach Anspruch 4, **dadurch gekennzeichnet, dass** die ersten Formationen und die zweiten Formationen eine luftdichte Rastverbindung und/oder Steckverbindung zwischen zwei Kanalelementen ermöglichen.

6. **Gebäudehülle** nach einem der Ansprüche 3 bis 5, **dadurch gekennzeichnet, dass** das Wellrohr und/oder die Innenhaut aus einem Polymermaterial gebildet ist.

7. **Gebäudehülle** nach einem der Ansprüche 1 bis 6, **dadurch gekennzeichnet, dass** der Hüllabschnitt ein über den Rohrabschnitt stülpbarer Schlauchabschnitt ist.

8. **Gebäudehülle** nach einem der vorhergehenden Ansprüche, **dadurch gekennzeichnet, dass** der Rohrabschnitt einen kreisförmigen Querschnitt oder einen quadratischen Querschnitt hat.

9. **Gebäudehülle** nach einem der Ansprüche 1 bis 8, **dadurch gekennzeichnet, dass** der Rohrabschnitt (25; 35; 65) einen Rohrabschnitt-Querschnitt mit zwei, insbesondere nur zwei, zueinander orthogonalen Symmetrieachsen hat, insbesondere einen rechteckförmigen, ovalförmigen oder elliptischen Querschnitt oder einen rechteckförmigen Querschnitt mit abgerundeten Ecken oder einen rennbahnartigen Querschnitt mit zwei zueinander parallelen, einander gegenüberliegenden geradlinigen Seiten und zwei halbkreisförmigen, einander gegenüberliegenden Seiten.

10. **Gebäudehülle** nach einem der vorhergehenden Ansprüche, **dadurch gekennzeichnet, dass** der Rohrabschnitt (65) und der Hüllabschnitt (10; 60) jeweils ein **gerader Abschnitt** sind.

11. **Gebäudehülle** nach einem der Ansprüche 1 bis 10, **dadurch gekennzeichnet, dass** der Rohrabschnitt (25; 35; 45; 55) und der Hüllabschnitt (20; 30; 40; 50) jeweils ein**gekrümmter Abschnitt** sind, dessen Krümmungswinkel insbesondere 45° oder 90°beträgt, wobei vorteilhaft vorgesehen ist, dass der Rohrabschnitt (25) und der Hüllabschnitt (20) jeweils ein **erster gekrümmter Abschnitt** sind, der in einer ersten Krümmungsebene liegt, welche eine erste Symmetrieachse, insbesondere die entlang der längsten Durchmesserlinie des Rohrabschnitt-Querschnitts verlaufende Symmetrieachse, enthält, oder dass der Rohrabschnitt (35) und der Hüllabschnitt (30) jeweils ein **zweiter gekrümmter Abschnitt** sind, der in einer zweiten Krümmungsebene liegt, welche eine zweite Symmetrieachse, insbesondere die entlang der kürzesten Durchmesserlinie des Rohrabschnitt-Querschnitts verlaufende Symmetrieachse, enthält.

12. **Gebäudehülle** nach einem der vorhergehenden Ansprüche, **dadurch gekennzeichnet, dass** der Rohrabschnitt (45; 55) und der Hüllabschnitt (40; 50) jeweils ein **Übergangsabschnitt** sind, wobei die erste Öffnung (O1) einen ersten Rohrabschnitt-Querschnitt, insbesondere einen kreisförmigen oder quadratischen Querschnitt, hat und die zweite Öffnung (O2) einen zweiten Rohrabschnitt-Querschnitt, insbesondere einen rechteckförmigen, ovalförmigen oder elliptischen Querschnitt oder einen rechteckförmigen Querschnitt mit abgerundeten Ecken oder einen rennbahnartigen Querschnitt mit zwei zueinander parallelen, einander gegenüberliegenden geradlinigen Seiten und zwei halbkreisförmigen, einander gegenüberliegenden Seiten, hat.

13. **Gebäudehülle** nach Anspruch 12, **dadurch gekennzeichnet, dass** die Stoss-Stellen aneinander grenzender Rohrabschnitte und die Stoss-Stellen aneinander grenzender Hüllabschnitte entlang der Kanal-Längsrichtung identisch sind.

14. **Gebäudehülle** nach Anspruch 12, **dadurch gekennzeichnet, dass** die Stoss-Stellen aneinander grenzender Rohrabschnitte und die Stoss-Stellen aneinander grenzender Hüllabschnitte entlang der Kanal-Längsrichtung versetzt sind, wobei die Stoss-Stellen der Rohrabschnitte und die Stoss-Stellen der Hüllabschnitte insbesondere um 1/5 bis um ein 1/2 einer Kanalelement-Länge entlang der Kanal-Längsrichtung versetzt sind.

15. Verfahren zur Herstellung einer Gebäudehülle gemäss einem der Ansprüche 1 bis 14, bei welchem zuerst erste Halbschalen von Hüllabschnitten an der Gebäudewand angebracht, anschliessend die jeweiligen geraden oder gekrümmten Rohrabschnitte innerhalb der Halbschalen aneinandergesetzt und schliesslich zweite Halbschalen auf den aneinandergesetzten Rohrabschnitten angebracht, und danach die Gebäudehülle angebracht bzw. fertiggestellt wird.

## Claims

1. A building envelope, which contains a duct element system for a ventilation system constructed from individual duct elements lined up with one another, wherein the duct element has a first opening (O1), a second opening (O2) and a duct wall that extends therebetween and surrounds a duct portion, wherein the duct element has a tube portion (25; 35; 45; 55; 65) and a thermally insulating sheath portion (10; 20; 30; 40; 50; 60), which is assigned to the tube portion and surrounds same, at least in some sub-regions, and consists of an inorganic fibre material, in particular rock wool or glass wool, and the sheath portion (10; 20; 30; 40; 50; 60) has a first part-shell (11; 21; 31; 41; 51; 61) and a second part-shell (12; 22; 32; 42; 52; 62), which completely surround the tube portion (25; 35; 45; 55; 65) in the circumferential direction of the tube portion, wherein the first part-shell is a first half-shell, and the second part-shell is a second half-shell, which each extend 180° in the circumferential direction of the tube portion.

2. The building envelope according to Claim 1, **characterised in that** it contains a substantially horizontal duct region, wherein the horizontal duct region extends in particular around the entire circumference of a ground plan of the building, and/or **in that** the building is a multi-storey building, wherein the duct system has multiple horizontal duct regions that are vertically offset from one another.

3. The building envelope according to Claim 1 or 2, **characterised in that** the tube portion is a flexible corrugated tube that has a flexible inner skin and in particular has a water vapour barrier.

4. The building envelope according to one of Claims 1 to 3, **characterised in that** the duct element has first formations at its first opening and second formations, which are complementary to the first formations, at its second opening.

5. The building envelope according to Claim 4, **characterised in that** the first formations and the second formations allow an airtight latching connection and/or plug-in connection between two duct elements.

6. The building envelope according to one of Claims 3 to 5, **characterised in that** the corrugated tube and/or the inner skin is formed from a polymer material.

7. The building envelope according to one of Claims 1 to 6, **characterised in that** the sheath portion is a hose portion that can be pulled over the tube portion.

8. The building envelope according to one of the preceding claims, **characterised in that** the tube portion has a circular cross section or a square cross section.

9. The building envelope according to one of Claims 1 to 8, **characterised in that** the tube portion (25; 35; 65) has a tube portion cross section with two, in particular only two, mutually orthogonal axes of symmetry, in particular a rectangular, oval or elliptical cross section or a rectangular cross section with rounded corners or a racetrack-shaped cross section with two mutually parallel, mutually opposing straight sides and two semicircular, mutually opposing sides.

10. The building envelope according to one of the preceding claims, **characterised in that** the tube portion (65) and the sheath portion (10; 60) are each a straight portion.

11. The building envelope according to one of Claims 1 to 10, **characterised in that** the tube portion (25; 35; 45; 55) and the sheath portion (20; 30; 40; 50) are each a curved portion, the angle of curvature of which is in particular 45° or 90°, wherein it is advantageously provided that the tube portion (25) and the sheath portion (20) are each a first curved portion that lies in a first plane of curvature, which contains a first axis of symmetry, in particular the axis of symmetry running along the longest diameter line of the tube portion cross section, or that the tube portion (35) and the sheath portion (30) are each a second curved portion that lies in a second plane of curvature, which contains a second axis of symmetry, in particular the axis of symmetry running along the shortest diameter line of the tube portion cross section.

12. The building envelope according to one of the preceding claims, **characterised in that** the tube portion (45; 55) and the sheath portion (40; 50) are each a transitional portion, wherein the first opening (O1) has a first tube portion cross section, in particular a circular or square cross section, and the second opening (O2) has a second tube portion cross section, in particular a rectangular, oval or elliptical cross section or a rectangular cross section with rounded corners or a racetrack-shaped cross section with two mutually parallel, mutually opposing straight sides and two semicircular, mutually opposing sides.

13. The building envelope according to Claim 12, **characterised in that** the joint points of mutually adjacent tube portions and the joint points of mutually adjacent sheath portions are identical in the duct longitudinal direction.

14. The building envelope according to Claim 12, **characterised in that** the joint points of mutually adjacent tube portions and the joint points of mutually adjacent sheath portions are offset in the duct longitudinal direction, wherein the joint points of the tube portions and the joint points of the sheath portions are offset in the duct longitudinal direction in particular by 1/5 to 1/2 of a duct element length.

15. A method for producing a building envelope according to one of Claims 1 to 14, in which first half-shells of sheath portions are attached to the building wall first, then the respective straight or curved tube portions are placed together within the half-shells, and finally second half-shells are attached on the placed-together tube portions, and then the building envelope is attached or finished.

## Revendications

1. Enveloppe de bâtiment, laquelle comprend un système d'éléments formant canalisation pour un système de ventilation constitué d'éléments individuels formant canalisation juxtaposés, l'élément formant canalisation comportant un premier orifice (O1), un deuxième orifice (O2), ainsi qu'une paroi de canalisation s'étendant entre ces derniers et entourant un tronçon de canalisation, l'élément formant canalisation comportant un tronçon tubulaire (25 ; 35 ; 45 ; 55 ; 65) et un tronçon d'enveloppe (10 ; 20 ; 30 ; 40 ; 50 ; 60) associé au tronçon tubulaire et enveloppant ce dernier au moins dans des zones partielles, isolant thermique, en une matière fibreuse inorganique, notamment en laine minérale ou en laine de verre et le tronçon d'enveloppe (10 ; 20 ; 30 ; 40 ; 50 ; 60) comportant une première coque partielle (11 ; 21 ; 31 ; 41 ; 51 ; 61) et une deuxième coque partielle (12 ; 22 ; 32 ; 42 ; 52 ; 62), lesquelles entourent totalement le tronçon tubulaire (25 ; 35 ; 45 ; 55 ; 65) le long de la direction périphérique du tronçon tubulaire, la première coque partielle étant une première demi-coque et la deuxième coque partielle étant une deuxième demi-coque, qui s'étendent chacune de la valeur 180° le long de la direction circonférentielle du tronçon tubulaire.

2. Enveloppe de bâtiment selon la revendication 1, **caractérisée en ce qu'**elle comprend une zone de canalisation s'écoulant sensiblement à l'horizontale, la zone de canalisation s'écoulant à l'horizontale s'étendant notamment le long de l'ensemble de la périphérie d'une projection de base du bâtiment, et/ou **en ce que** le bâtiment est un bâtiment à plusieurs étages, le système de canalisation comportant plusieurs zones de canalisation s'écoulant à l'horizontale, mutuellement décalées à la verticale.

3. Enveloppe de bâtiment selon la revendication 1 ou 2, **caractérisée en ce que** le tronçon tubulaire est un tube ondulé flexible, doté d'une membrane intérieure, qui comporte notamment un écran pare-vapeur.

4. Enveloppe de bâtiment selon l'une quelconque des revendications 1 à 3, **caractérisée en ce que** l'élément formant canalisation comporte sur son premier orifice des premières conformations et sur son deuxième orifice, des deuxièmes conformations, qui sont complémentaires des premières conformations.

5. Enveloppe de bâtiment selon la revendication 4, **caractérisée en ce que** les premières conformations et les deuxièmes conformations permettent un assemblage par enclenchement et/ou un assemblage par enfichage étanche à l'air entre deux éléments formant canalisation.

6. Enveloppe de bâtiment selon l'une quelconque des revendications 3 à 5, **caractérisée en ce que** le tube ondulé et/ou la membrane intérieure est formé(e) en une matière polymère.

7. Enveloppe de bâtiment selon l'une quelconque des revendications 1 à 6, **caractérisée en ce que** le tronçon d'enveloppe est un tronçon de flexible susceptible d'être emboîté par-dessus le tronçon tubulaire.

8. Enveloppe de bâtiment selon l'une quelconque des revendications précédentes, **caractérisée en ce que** le tronçon tubulaire a une section transversale de forme circulaire ou une section transversale de forme quadratique.

9. Enveloppe de bâtiment selon l'une quelconque des revendications 1 à 8, **caractérisée en ce que** le tronçon tubulaire (25 ; 35 ; 65) a une section transversale de tronçon tubulaire, dotée de deux, notamment uniquement de deux axes de symétrie, orthogonaux l'un par rapport à l'autre, notamment une section transversale de forme rectangulaire, de forme ovale ou de forme elliptique ou une section transversale de forme rectangulaire avec des angles arrondis ou une section transversale en forme de circuit automobile, dotée de deux côtés rectilignes parallèles l'un par rapport à l'autre, mutuellement opposés et de deux côtés mutuellement opposés, en forme de demi-cercles.

10. Enveloppe de bâtiment selon l'une quelconque des revendications précédentes, **caractérisée en ce que** le tronçon tubulaire (65) et le tronçon d'enveloppe (10 ; 60) sont chacun un tronçon droit.

11. Enveloppe de bâtiment selon l'une quelconque des revendications 1 à 10, **caractérisée en ce que** le tronçon tubulaire (25 ; 35 ; 45 ; 55) et le tronçon d'enveloppe (20 ; 30 ; 40 ; 50) sont chacun un tronçon incurvé, dont l'angle de courbure s'élève notamment à 45° ou à 90°, étant prévu avantageusement que le tronçon tubulaire (25) et le tronçon d'enveloppe (20) soient chacun un premier tronçon recourbé, qui se situe dans un premier plan de courbure, lequel contient un premier axe de symétrie, notamment l'axe de symétrie s'écoulant le long de la plus longue ligne diamétrale de la section transversale du tronçon tubulaire ou que le tronçon tubulaire (35) et le tronçon d'enveloppe (30) soient chacun un deuxième tronçon recourbé, qui se situe dans un deuxième plan de courbure, lequel contient un deuxième axe de symétrie, notamment l'axe de symétrie s'écoulant le long de la plus courte ligne diamétrale de la section transversale du tronçon tubulaire.

12. Enveloppe de bâtiment selon l'une quelconque des revendications précédentes, **caractérisé en ce que** le tronçon tubulaire (45 ; 55) et le tronçon d'enveloppe (40 ; 50) sont chacun un tronçon de passage, le premier orifice (O1) ayant une première section transversale de tronçon tubulaire, notamment une section transversale de forme circulaire ou quadratique et le deuxième orifice (O2) ayant une deuxième section transversale de tronçon tubulaire, notamment une section transversale de forme rectangulaire, de forme ovale ou elliptique ou une section transversale de forme rectangulaire avec des angles arrondis ou une section transversale en forme de circuit automobile, dotée de deux côtés parallèles l'un par rapport à l'autre, mutuellement opposés et de deux côtés en forme de demi-cercles, mutuellement opposés.

13. Enveloppe de bâtiment selon la revendication 12, **caractérisée en ce que** les aboutages de segments tubulaires adjacents et les aboutages de tronçons d'enveloppe adjacents sont identiques le long de la direction longitudinale de la canalisation.

14. Enveloppe de bâtiment selon la revendication 12, **caractérisée en ce que** les aboutages de tronçons tubulaires adjacents et les aboutages de tronçons d'enveloppe adjacents sont décalés le long de la direction longitudinale de la canalisation, les aboutages des tronçons tubulaires et les aboutages des tronçons d'enveloppe étant décalés notamment de 1/5 à de 1/2 d'une longueur d'élément formant canalisation, le long de la direction longitudinale de la canalisation.

15. Procédé, destiné à fabriquer une enveloppe de bâtiment selon l'une quelconque des revendications 1 à 14, lors duquel l'on monte dans un premier temps des premières demi-coques de tronçons d'enveloppe sur le mur du bâtiment, l'on aboute ensuite les tronçons tubulaires droits ou recourbés respectifs à l'intérieur des demi-coques, puis l'on monte pour finir des deuxièmes demi-coques sur les tronçons tubulaires aboutés, puis l'on monte ou l'on parachève l'enveloppe de bâtiment.
